# EUROPÄISCHE PATENTANMELDUNG

(11) **EP 4 755 173 A1**
(43) Veröffentlichungstag der Anmeldung: **10.06.2026**
(21) Anmeldenummer: 25211920.1
(22) Anmeldetag: 29.10.2025
(51) Int. Cl.: A01D 41/14, A01D 57/01, A01D 57/26, A01D 57/06, A01D 34/04

(54) **SCHNEIDWERK FÜR EINE SELBSTFAHRENDE ERNTEMASCHINE SOWIE SELBSTFAHRENDE ERNTEMASCHINE**

(30) Priorität: 03.12.2024 DE 102024135789
(71) Anmelder: CLAAS Selbstfahrende Erntemaschinen GmbH, 33428 Harsewinkel (DE)
(72) Erfinder: Denke, Tamás, 1089 Budapest (HU); Kiffmeier, Norbert, 33428 Harsewinkel (DE); Eidhoff, Lukas, 33378 Rheda-Wiedenbrück (DE); Nagy, Mate Tibor, 4531 Nyftpazony (HU); Domokos, Ferenc, 5600 Békéscsaba (HU); Driftschröer, Peter, 33442 Herzebrock-Cöarholz (DE)
(74) Vertreter: CLAAS Gruppe

(57) **Zusammenfassung**

Die vorliegende Anmeldung betrifft ein Schneidwerk (1) für eine selbstfahrende Erntemaschine (2), umfassend ein antreibbares, sich in Breitenrichtung (3) des Schneidwerks (1) erstreckendes Schneidorgan (4), zwei Seitenwände (6, 7), die einander gegenüberliegenden Enden des Schneidwerks (1) bilden, wobei das Schneidorgan (4) dazu vorgesehen und eingerichtet ist, auf einem Feld aufstehende Pflanzen abzuschneiden, wobei eine in Breitenrichtung (3) des Schneidwerks (1) gemessene Länge des Schneidorgans (4) im Wesentlichen einer gleichartig gemessenen Breite des Schneidwerks (1) entspricht, wobei die Seitenwände (6, 7) jeweils ein dem Schneidorgan (4) zugewandtes Seitenwandelement (8, 9) umfassen, das einen seitlichen Abschluss der jeweiligen Seitenwand (6, 7) hin zu dem Schneidorgan (4) bildet.

Um ein Schneidwerk bereitzustellen, bei dem die Abführung der abgeschnittenen Pflanzen aus den seitlich äußeren Endbereichen des Schneidwerks verbessert ist, wird erfindungsgemäß vorgeschlagen, dass das Seitenwandelement (8) einer ersten der beiden Seitenwände (6) unter Ausbildung mindestens einer Stufe (10, 11) gestuft ausgebildet ist, wobei mindestens eine der Seitenwände (6, 7) eine gekrümmte Oberseite (12) aufweist.

## Beschreibung

Die vorliegende Anmeldung betrifft ein Schneidwerk für eine selbstfahrende Erntemaschine gemäß dem Oberbegriff von Anspruch 1. Die selbstfahrende Erntemaschine kann beispielsweise und vorzugsweise ein selbstfahrender Mähdrescher sein. Ferner betrifft die vorliegende Anmeldung eine selbstfahrende Erntemaschine mit einem erfindungsgemäßen Schneidwerk gemäß Anspruch 17.

Das Schneidwerk umfasst ein Schneidorgan, mittels dessen auf einem Feld aufstehende Pflanzen abgeschnitten werden können. Hierzu ist es beispielsweise und vorzugsweise an einem in Fahrtrichtung der Erntemaschine betrachtet vorderen Ende der Erntemaschine angeordnet. Am Beispiel eines Mähdreschers ist das Schneidwerk an einem Schrägförderer des Mähdreschers aufgehängt und ggf. ergänzend über Räder auf dem Untergrund geführt. Das Schneidwerk wird derart nah über dem Boden geführt, dass das Schneidorgan die Pflanzen in geringer Höhe über dem Boden abschneiden kann. Die abgeschnittenen Pflanzen werden sodann von dem Schneidwerk an ein nachgelagertes Arbeitsorgan der Erntemaschine übergeben, sodass sie weiterverarbeitet werden können. Am Beispiel des Mähdreschers werden die abgeschnittenen Pflanzen beispielsweise mittels einer Querförderschnecke oder mittels Förderbändern in einem Mittelbereich des Schneidwerks zusammengeführt und von dort in rückwärtige Richtung des Schneidwerks an einen Schrägförderer des Mähdreschers übergeben. Mittels des Schrägförderers werden die abgeschnittenen Pflanzen weiter in Richtung nachgelagerter Arbeitsorgane (Dreschorgan, Sieborgan, etc.) befördert. Das Schneidwerk weist zwei Seitenwände auf, die in Breitenrichtung des Schneidwerks betrachtet einander gegenüberliegende Enden des Schneidwerks bilden.

Ein Schneidwerk der eingangs beschriebenen Art ist im Stand der Technik bereits bekannt. Hierzu wird beispielsweise auf das europäische Patent EP 1 632 124 B1 hingewiesen. Dieses betrifft ein Schneidwerk für eine Erntemaschine, wobei das Schneidwerk einander gegenüberliegende Seitenwände aufweist. Hierbei ist zumindest eine der Seitenwände mit einem Versatz ausgebildet, der wiederum als Gutleitelement ausgebildet ist.

In der praktischen Anwendung hat sich bei bekannten Schneidwerken herausgestellt, dass abgeschnittene Pflanzen obenseitig auf der Seitenwand ansammeln und die Abfuhr der abgeschnitten Pflanzen aus den in Breitenrichtung betrachtet äußeren Endbereichen des Schneidwerks negativ beeinflusst wird. Weiterhin kann es vorkommen, dass von der Oberseite an dem jeweiligen Seitenwandelement der jeweiligen Seitenwand herabgleitende Pflanzen untenseitig (am Boden des Schneidwerks) besonders abrupt umgelenkt werden, wodurch Halme der abgeschnittenen Pflanzen in unerwünschter Weise brechen oder knicken können.

Der vorliegenden Anmeldung liegt die Aufgabe zugrunde, ein Schneidwerk bereitzustellen, bei dem die Abführung der abgeschnittenen Pflanzen aus den seitlich äußeren Endbereichen des Schneidwerks verbessert ist.

Die zugrunde liegende Aufgabe wird erfindungsgemäß mittels eines Schneidwerks mit den Merkmalen des Anspruchs 1 gelöst. Vorteilhafte Ausgestaltungen ergeben sich aus den Unteransprüchen, der Beschreibung sowie dem Ausführungsbeispiel.

Das Schneidwerk ist bestimmungsgemäß als Anbaugerät für eine selbstfahrende Erntemaschine vorgesehen und eingerichtet. Bevorzugt ist es für die Verwendung für einen selbstfahrenden Mähdrescher vorgesehen.

Das Schneidwerk umfasst ein antreibbares, sich in Breitenrichtung des Schneidwerks erstreckendes Schneidorgan. Dieses kann beispielsweise und vorzugsweise ein Mähmesser umfassen, das in an sich bekannter Weise einen feststehenden ersten Messerbalken und einen dem ersten Messerbalken zugeordneten, oszillierend antreibbaren zweiten Messerbalken aufweist. Das Schneidorgan ist bevorzugt an einem in Fahrtrichtung betrachtet vorderen Ende des Schneidwerks angeordnet. Der Antrieb des Schneidorgans kann über ein Antriebsmittel des Schneidwerks erfolgen. Das Schneidorgan ist dazu vorgesehen und eingerichtet, auf einem Feld aufstehende Pflanzen abzuschneiden.

Ferner umfasst das Schneidwerk zwei Seitenwände, die in Breitenrichtung des Schneidwerks betrachtet einander gegenüberliegende Enden des Schneidwerks bilden. Das Schneidorgan erstreckt sich zwischen den beiden Seitenwänden, vorzugsweise bis unmittelbar an die Seitenwände heran. Eine in Breitenrichtung des Schneidwerks gemessene Länge des Schneidorgans entspricht bevorzugt im Wesentlichen einer gleichartig gemessenen Breite des Schneidwerks. Die gesamte in Breitenrichtung gemessene Breite des Schneidwerks ergibt sich bevorzugt zumindest im Wesentlichen aus einer Summe der in Breitenrichtung gemessene Länge des Schneidorgans und der gleichermaßen in Breitenrichtung des Schneidwerks gemessenen Breiten der einander gegenüberliegenden Seitenwände. Die Seitenwände weisen jeweils ein Seitenwandelement auf, das die jeweilige Seitenwand in dem Mittelbereich des Schneidwerks zugewandte Richtung bzw. in Richtung des Schneidorgans hin abschließt. Die Seitenwände erheben sich ausgehend von einem Boden des Schneidwerks in Richtung senkrecht zu der Breitenrichtung des Schneidwerks.

Die Seitenwände weisen jeweils ein Seitenwandelement auf, das jeweils dem Schneidorgan bzw. dem Mittelbereich des Schneidwerks zugewandt ist. Mit anderen Worten bilden die Seitenwandelemente jeweils einen nach zum Mittelbereich des Schneidwerks hin gerichteten Abschluss der jeweiligen Seitenwand. Die Seitenwandelemente können beispielsweise und vorzugsweise nach Art einer von einem Blech gebildeten Seitenverkleidung der jeweiligen Seitenwand ausgebildet sein.

Erfindungsgemäß ist das Seitenwandelement zumindest einer ersten der beiden Seitenwände unter Ausbildung mindestens einer Stufe gestuft ausgebildet. Bevorzugt sind die Seitenwandelemente beider Seitenwände unter Ausbildung jeweils mindestens einer Stufe ausgebildet.

Unter einer "Stufe" wird im Sinne der vorliegenden Anmeldung eine Ausformung des Seitenwandelements verstanden, die eine Veränderung einer in Breitenrichtung des Schneidwerks gemessenen Breite der Seitenwand bewirkt. Beispielsweise und vorzugsweise bewirkt die Stufe des Seitenwandelements, dass sich eine in Hochrichtung des Schneidwerks orientierte Oberfläche des Seitenwandelements in Breitenrichtung des Schneidwerks betrachtet verlagert. Sofern die Seitenwandelemente beider Seitenwände gestuft ausgebildet sind, was zu bevorzugten ist, gelten alle nachstehend beschriebenen vorteilhaften Ausgestaltung betreffend die erste Seitenwand bevorzugt analog auch für die zweite Seitenwand mit deren Seitenwandelement.

Die Stufe ist beispielsweise und vorzugsweise derart ausgebildet, dass eine Oberfläche des Seitenwandelements durch Wirkung der Stufe von einer ersten, senkrecht zu der Breitenrichtung des Schneidwerks orientierten Ebene hin zu einer parallel z zu der ersten Ebene orientierten zweiten Ebene verspringt, wobei die zweite Ebene in Breitenrichtung des Schneidwerks betrachtet von der ersten Ebene beabstandet ist. Der Abstand zwischen den beiden Ebenen ist durch ein Stufenmaß der Stufe bestimmt. Insbesondere kann die Oberfläche des Seitenwandelements derart durch die Stufe in Breitenrichtung des Schneidwerks verspringen, dass sich ein in Breitenrichtung des Schneidwerks gemessener Abstand zwischen einer senkrecht zu der Breitenrichtung orientierten, das Schneidwerk mittig gedanklich in zwei Hälften teilenden Mittelebene des Schneidwerks und der jeweiligen Oberfläche des Seitenwandelements durch Wirkung der Stufe verändert. Hierbei ist die Stufe bevorzugt derart ausgebildet, dass dieser Abstand in einem unteren, in Hochrichtung des Schneidwerks betrachtet unterhalb der Stufe angeordnet ersten Wandungsbereich der Seitenwand anders ist als in einem in Hochrichtung betrachtet oberhalb der Stufe angeordneten zweiten Wandungsbereich. Bevorzugt ist der Abstand zu der Mittelebene in dem ersten Wandungsbereich kleiner als in dem darüber befindlichen zweiten Wandungsbereich. Anders ausgedrückt ist es vorteilhaft, wenn das Seitenwandelement durch die mindestens eine Stufe seitlich "nach außen" verspringt. Eine entsprechende Ausgestaltung ist auch dem untenstehenden Ausführungsbeispiel entnehmbar, bei dem das Seitenwandelement mit zwei Stufen ausgebildet ist, die jeweils einen Versprung des Seitenwandelements in der beschriebenen Weise nach außen bewirken.

Die Stufe kann grundsätzlich beliebig ausgeformt sein. Mithin kann sie beispielsweise eine geschwungene Form aufweisen, sodass das Seitenwandelement frei von Knicken ausgebildet ist. Ebenfalls ist es denkbar, dass die Stufe eine oder mehrere in sich ebene Flächen aufweist und unter Ausbildung jeweils eines Knicks in die jeweilig an die Stufe angrenzenden Oberflächen des Seitenwandelements übergeht. Die Stufe kann in Breitenrichtung des Schneidwerks betrachtet schräg oder parallel zu der Breitenrichtung orientiert sein, wobei beispielsweise das Seitenwandelement im Bereich der Stufe gegenüber seinen jeweils angrenzenden Oberflächen zumindest im Wesentlichen um 90° abgekantet sein kann.

Ferner ist erfindungsgemäß vorgesehen, dass mindestens eine der Seitenwände eine gekrümmte Oberseite aufweist.

Unter einer "gekrümmten Oberseite" ist im Sinne der vorliegenden Anmeldung zu verstehen, dass die Seitenwand, die die gekrümmte Oberseite aufweist, an ihrer Oberseite nicht eben ausgebildet ist. Vorzugsweise erstreckt sich die Krümmung in einem parallel zu der Breitenrichtung des Schneidwerks geführten, vertikalen Querschnitt der Seitenwand betrachtet bogenförmig über eine gesamte in Breitenrichtung des Schneidwerks gemessene Breite der Seitenwand. Demzufolge ist es bevorzugt, wenn sich die Krümmung der Oberseite von einer dem Schneidorgan zugewandten inneren Seite der Seitenwand bis zu einer gegenüberliegenden, dem Schneidorgan abgewandten äußeren Seite der Seitenwand erstreckt. Eine entsprechende Ausgestaltung ist auch dem untenstehenden Ausführungsbeispiel entnehmbar. Beispielsweise und vorzugsweise kann die Oberseite konvex gekrümmt ausgebildet sein. **In** der senkrecht zu der Breitenrichtung orientierten Längsrichtung des Schneidwerks betrachtet erstreckt sich die gekrümmte Oberseite bevorzugt über die gesamte Länge der Seitenwand.

Bevorzugt weisen beide Seitenwände des Schneidwerks jeweils eine gekrümmte Oberseite auf. Sofern lediglich eine der Seitenwände eine gekrümmte Oberseite aufweist, ist es besonders zu bevorzugen, wenn es sich dabei um die erste Seitenwand handelt, deren Seitenwandelement gestuft ausgebildet ist. Umgekehrt ist es vorteilhaft, dass, wenn das Seitenwandelement nur einer der beiden Seitenwände mit einer Stufe ausgebildet ist, zumindest diese Seitenwand die gekrümmte Oberseite aufweist.

Das erfindungsgemäße Schneidwerk hat viele Vorteile. Zum einen bewirkt die gekrümmte Oberseite der mindestens einen Seitenwand, dass sich auf der Oberseite dieser Seitenwand die abgeschnittenen Pflanzen nur noch schwerlich, bestenfalls gar nicht, dauerhaft niederlassen und auf diese Weise in unerwünschter Weise ansammeln können. Mithin führt die gekrümmte Ausgestaltung der Oberseite dazu, dass die Pflanzen entweder in Richtung "nach innen" (das heißt in Richtung der dem Schneidorgan zugewandten Innenseite der Seitenwand) oder in Richtung "nach außen" von der Seitenwand abrutschen. Eine Ansammlung abgeschnittener Pflanzen auf der Oberseite der Seitenwand ist hierdurch zumindest weitestgehend vermieden.

Zum anderen bewirkt die gestufte Ausgestaltung des Seitenwandelements, dass die abgeschnittenen Pflanzen, die an der Seitenwand herabgleiten, derart an der mindestens eine Stufe umgelenkt werden, dass das Risiko des unerwünschten Knickens oder Brechens der Halme der Pflanzen deutlich reduziert ist. Hierdurch wird die Qualität des erzeugten Ernteguts gesichert bzw. im Unterschied zum Stand der Technik nicht negativ beeinflusst. Ferner werden infolge des Knickens bzw. Brechens einzelner Halme der abgeschnittenen Pflanzen bedingte Effekte, die den Gutfluss der abgeschnittenen Pflanzen negativ beeinflussen können, vermieden. Auf diese Weise trägt die gestufte Ausgestaltung des Seitenwandelements auch dazu bei, dass der Gutfluss in dem Schneidwerk verbessert wird.

**In** bevorzugter Ausgestaltung weist das Seitenwandelement der ersten Seitenwand mindestens zwei Stufen auf. Vorzugsweise weist das Seitenwandelement genau zwei Stufen auf. Sofern beide Seitenwände jeweils mit einem gestuften Seitenwandelement ausgebildet sind, gilt diese bevorzugte Ausgestaltung mit mindestens zwei Stufen für beide Seitenwandelemente bzw. beide Seitenwände. Die Ausgestaltung mit mehr als einer Stufe hat den Vorteil, dass das Risiko des Knickens oder Brechens der Halme der abgeschnittenen Pflanzen weiter reduziert ist. Wenn mehrere Stufen vorhanden sind, sind diese in Hochrichtung des Schneidwerks betrachtet übereinander in das Seitenwandelement eingebracht und in Hochrichtung betrachtet voneinander beabstandet.

In bevorzugter Ausgestaltung des Schneidwerks ist die mindestens eine Stufe des Seitenwandelements der ersten Seitenwand derart ausgebildet, dass sie eine Reduktion einer in Breitenrichtung des Schneidwerks gemessene Breite der ersten Seitenwand bewirkt. Hierbei ist die erste Seitenwand derart ausgebildet, dass ihre in Breitenrichtung des Schneidwerks gemessene Breite an ihrem unteren, in Hochrichtung des Schneidwerks betrachtet dem Schneidorgan zugewandten Ende maximal ist. Sofern das Seitenwandelement mehrere Stufen aufweist, sind vorzugsweise sämtliche Stufen derart ausgebildet, dass sie eine solche Reduktion der Breite der Seitenwand bewirken.

Die Ausgestaltung bedeutet mit anderen Worten, dass die Breite der Seitenwand mit jeder Stufe des zugehörigen Seitenwandelements in Hochrichtung des Schneidwerks betrachtet weiter abnimmt. Mithin ist bei dieser Ausgestaltung die Breite der Seitenwand an ihrem unteren, dem Schneidorgan zugewandten Ende maximal und nimmt mit jeder Stufe nach oben hin sukzessive ab, sodass die Breite der Seitenwand an ihrer Oberseite, das heißt ihrem oberen, dem Schneidorgan abgewandten Ende, minimal ist. Dies hat den besonderen Vorteil, dass die Seitenwand an ihrer Oberseite vergleichsweise schmal ausfällt, wodurch eine unerwünschte Ansammlung bzw. Ablage abgeschnittener Pflanzen erschwert ist.

Insbesondere mit Blick darauf, dass in bevorzugter Ausgestaltung zumindest in der ersten Seitenwand des Schneidwerks ein Antriebsmittel zum Antrieb des Schneidorgans untergebracht ist, ist es durch die mindestens eine Stufe nicht erforderlich, eine vergleichsweise große Breite der ersten Seitenwand in einem unteren Wandungsbereich der Seitenwand, in dem sich das Antriebsmittel befindet, bis zum oberen Ende der Seitenwand bzw. ihrer Oberseite beizubehalten. Stattdessen kann die Breite der ersten Seitenwand bedingt durch die mindestens eine Stufe (vorzugsweise durch mindestens eine von mehreren Stufen) in Hochrichtung des Schneidwerks bis zur Oberseite abnehmen, wobei bevorzugt die Breite der Seitenwand in einem Wandungsbereich oberhalb des Antriebsmittels reduziert ist. Insbesondere kann das Seitenwandelement in Breitenrichtung des Schneidwerks so weit nach außen verspringen, dass die Breite der Seitenwand oberhalb des Antriebsmittels geringer ist als die in Breitenrichtung des Schneidwerks gemessene Breite des Antriebsmittels selbst.

In besonders bevorzugter Ausführungsform ist zumindest eine erste Stufe des Seitenwandelements unmittelbar an einem unteren, dem Schneidorgan zugewandten Ende des Seitenwandelements ausgebildet. Auf diese Weise kann das Seitenwandelement an seinem unteren Ende nach Art eines Einlaufbereichs ausgebildet sein, der für an der Seitenwand herabfallende Pflanzen einen besseren Übergang zu dem jeweiligen Boden des Schneidwerks schafft. Dieser entsprechend "sanftere" Übergang von der Seitenwand zu dem Boden des Schneidwerks reduziert das Risiko eines unerwünschten Knickens oder Brechens der Halme an der Seitenwand herabfallender abgeschnittener Pflanzen.

**In** bevorzugter Ausgestaltung des Schneidwerks umfasst selbiges eine sich parallel zu dem Schneidorgan erstreckende Haspel. Diese ist zumindest im Wesentlichen oberhalb des Schneidorgans angeordnet. Ferner ist die Haspel drehantreibbar gelagert, sodass sie mittels eines Antriebs um ihre parallel zu der Breitenrichtung des Schneidwerks orientierte Mittelachse gedreht werden kann. Die Haspel ist dazu vorgesehen und eingerichtet, beim bestimmungsgemäßen Betrieb des Schneidwerks im Zuge des Abschneidens der jeweiligen Pflanzen, das mittels des Schneidorgans erfolgt, derart mit den Pflanzen einzugreifen, dass ein sauberer Abschnitt der Pflanzen erfolgt und diese im Anschluss an ihren Abschnitt geordnet auf dem Boden des Schneidwerks abgelegt werden. Hierzu umfasst die Haspel eine Vielzahl von Haspelfingern, die mit den Pflanzen eingreifen können. Der Boden des Schneidwerks kann je nach Ausgestaltung des Schneidwerks von einem klassischen Schneidtisch oder mindestens einem Förderband gebildet sein. Letzteres ist der Fall, wenn das Schneidwerk gemäß nachstehender Beschreibung in bevorzugter Weise von einem Bandschneidwerk gebildet ist, das in der Technik auch als "Draper-Schneidwerk" bezeichnet wird.

Die Haspel ist bevorzugt derart ausgebildet und angeordnet, dass sie sich zwischen den beiden Seitenwänden des Schneidwerks erstreckt. Mithin ist eine parallel zu der Breitenrichtung des Schneidwerks gemessene Länge der Haspel betragsmäßig kleiner als die gleichartig gemessene Breite des Schneidwerks. Die Länge der Haspel entspricht bevorzugt im Wesentlichen der parallel zur Breitenrichtung des Schneidwerks gemessenen Länge des Schneidorgans.

Sofern das Schneidwerk eine Haspel umfasst, ist es vorteilhaft, wenn diese zumindest an ihrem der ersten Seitenwand zugewandten Ende einen Haspelteller aufweist, an dem mindestens ein Paddel angeordnet bzw. gelagert ist. Vorzugsweise sind an dem Haspelteller mehrere Paddel gelagert. Sofern dies der Fall ist, sind diese bevorzugt in radiale Richtung bezogen auf die Mittelachse der Haspel in unterschiedlichen radialen Abständen von der Mittelachse angeordnet. Auch ist es denkbar - zusätzlich oder alternativ zu der Anordnung in unterschiedlichen radialen Abständen -, dass mehrere Paddel vorhanden sind, die in Umfangsrichtung um eine Mittelachse der Haspel, um die die Haspel drehantreibbar ist, verteilt an dem Haspelteller angeordnet sind. Sofern mehrere Paddel vorhanden sind und diese in Umfangsrichtung verteilt sind, ist es weiterhin vorteilhaft, wenn diese äquidistant angeordnet sind.

Das mindestens eine Paddel erstreckt sich ausgehend von dem Haspelteller in Breitenrichtung des Schneidwerks von dem Haspelteller weg und dadurch in Richtung auf die erste Seitenwand zu. Bevorzugt ist der Haspelteller mit dem mindestens einen daran angeordneten Paddel derart relativ zu dem Seitenwandelement der ersten Seitenwand angeordnet, dass ein Wirkungsbereich des mindestens einen Paddels einem Wandungsabschnitt des Seitenwandelements der ersten Seitenwand zugeordnet ist. Diese Zuordnung besteht darin, dass das mindestens eine Paddel sich in dem Wandungsabschnitt derart nah zu der Oberfläche des Seitenwandelements befindet, dass sich bei bestimmungsgemäßem Betrieb des Schneidwerks das Paddel in dem Wandungsabschnitt in unmittelbarer Nähe zu dem Seitenwandelement entlang bewegt. Diese Bewegung erfolgt vorzugsweise kontaktfrei, das heißt das Paddel tritt bevorzugt nicht in unmittelbaren "schleifenden" Kontakt mit dem Seitenwandelement der ersten Seitenwand, sondern bewegt sich in unmittelbarer Nähe zu dem Seitenwandelement. Die Bewegung des Paddels nah zu dem Seitenwandelement hat den Vorteil, dass etwaige abgeschnittene Pflanzen, die sich in dem genannten Wandungsabschnitt des Seitenwandelements befinden, von dem Paddel erfasst und dadurch mobilisiert bzw. "abgestreift" werden. Dies hat zur Folge, dass die abgeschnittenen Pflanzen auf den Boden des Schneidwerks herabfallen und dort weiterverarbeitet werden können. Einer unerwünschten Ansammlung der abgeschnittenen Pflanzen wird auf diese Weise vorgebeugt. Durch die Anordnung mehrerer Paddel an dem Haspelteller ist der Wandungsabschnitt, in dem die abstreifende Wirkung der Paddel gegenüber dem Seitenwandelement eintritt, gegenüber einer Ausgestaltung mit nur genau einem Paddel verbessert.

Um Beschädigungen des Seitenwandelements sicher zu vermeiden, kann es vorteilhaft sein, wenn das mindestens eine Paddel (wenn mehrere Paddel vorhanden sind vorzugsweise sämtliche Paddel) an ihrem dem Haspelteller abgewandten freien Ende aus Gummi ausgebildet sind. Auf diese Weise ist sichergestellt, dass im Falle eines unbeabsichtigten schleifenden Kontakts des Paddels mit dem Seitenwandelement eine Beschädigung des letzteren vermieden ist. Falls das freie Ende des Paddels aus Gummi ist, kann es vorteilhaft sein, wenn das Paddel zweiteilig ausgebildet ist, nämlich mit einer Basis, die unmittelbar mit dem Haspelteller verbunden, vorzugsweise verschraubt, ist und einer an die Basis angeschlossenen Gummilippe, die das freie Ende des Paddels bildet. Die Gummilippe kann beispielsweise und vorzugsweise mit der Basis unter Ausbildung einer zerstörungsfrei lösbaren Verbindung verbunden sein, sodass die Gummilippe besonders einfach getauscht werden kann.

Bevorzugt weist die Haspel an beiden ihren endseitigen Haspeltellern mindestens ein Paddel, vorzugsweise mehrere Paddel auf. Die vorstehend für die erste Seitenwand beschriebenen Vorteile ergeben sich für die zweite Seitenwand analog. Dies gilt insbesondere dann, wenn auch das Seitenwandelement der zweiten Seitenwand mit mindestens einer Stufe ausgebildet ist.

Sofern der Haspelteller mit dem mindestens einen Paddel in der beschriebenen Weise angeordnet ist, kann es weiterhin vorteilhaft sein, wenn sich der Wandungsabschnitt des Seitenwandelements, dem der Wirkungsbereich des mindestens einen Paddels zugeordnet ist, oberhalb der mindestens einen Stufe des Seitenwandelements befindet. Vorzugsweise grenzt dieser Wandungsabschnitt unmittelbar in Hochrichtung des Schneidwerks betrachtet an die Oberseite der ersten Seitenwand an bzw. erstreckt sich ausgehend von der Oberseite nach unten. Mit anderen Worten ist es besonders vorteilhaft, wenn der dem Paddel zugeordnete Wandungsabschnitt des Seitenwandelements übereinstimmend mit dem oberen Wandungsbereich der Seitenwand ausgebildet ist und entsprechend das mindestens eine Paddel in diesem oberen Wandungsbereich der Seitenwand mit dem Seitenwandelement der ersten Seitenwand zusammenwirkt. **In** diesem oberen Wandungsbereich der Seitenwand ist ein unbeabsichtigter Aufenthalt abgeschnittener Pflanzen, die sich beispielsweise trotz der gekrümmten Ausgestaltung der Oberseite der Seitenwand angesammelt haben können, schwerpunktmäßig zu erwarten, sodass die abstreifende Wirkung des mindestens einen Paddels in diesem oberen Wandungsbereich besonders sinnvoll ist. Sofern die Haspel an ihren beiden endseitigen Haspeltellern mit jeweils mindestens einem Paddel ausgebildet ist, ist die vorstehend für die erste Seitenwand beschriebene Ausgestaltung und Anordnung analog auch für die zweite Seitenwand vorteilhaft.

Ferner kann es besonders vorteilhaft sein, wenn oberhalb der mindestens einen Stufe des Seitenwandelements der ersten Seitenwand mindestens ein Haspelfinger der Haspel einen Wirkungsbereich aufweist. Sofern das Seitenwandelement mit mehreren Stufen ausgebildet ist, ist es vorteilhaft, wenn der mindestens einen Haspelfinger seinen Wirkungsbereich oberhalb der in Hochrichtung des Schneidwerks betrachtet untersten Stufe aufweist. Mit anderen Worten kann es vorteilhaft sein, wenn oberhalb der (vorzugsweise untersten) Stufe mindestens ein Haspelfinger der Haspel wirkt. Auf diese Wiese - vorzugsweise in Kombination mit dem mindestens einem Paddel - wird erreicht, dass sich oberhalb der Stufe (bei mehreren Stufen: oberhalb sämtlicher Stufen) keine abgeschnittenen Pflanzen ansammeln, da diese von dem Haspelfinger erfasst und mobilisiert werden. Hierdurch wird eine bessere Abförderung der abgeschnittenen Pflanzen aus dem Bereich der jeweiligen Seitenwand des Schneidwerks in Richtung des Mittelbereichs des Schneidwerks bewirkt.

Wie vorstehend bereits angedeutet ist, kann eine solche Ausgestaltung des Schneidwerks besonders vorteilhaft sein, bei dem in der ersten Seitenwand mindestens ein Antriebsmittel zum Antreiben des Schneidorgans angeordnet ist. Bei einem solchen Antriebsmittel kann es sich beispielsweise um ein Getriebe handeln, mittels dessen eine rotatorische Bewegung einer Antriebswelle in eine oszillierende Bewegung eines ersten Mähmessers des Schneidorgans übersetzt wird.

Sofern ein Antriebsmittel in der der ersten Seitenwand angeordnet ist, ist es weiterhin vorteilhaft, wenn die mindestens eine Stufe des Seitenwandelements der ersten Seitenwand in Hochrichtung betrachtet entweder im Bereich eines oberen Endes des Antriebsmittels oder oberhalb des Antriebsmittels angeordnet ist. Diese Ausgestaltung hat zur Folge, dass die erste Seitenwand in einem oberhalb des Antriebsmittels befindlichen oberen Wandungsbereich der Seitenwand gegenüber einem unteren Wandungsbereich der Seitenwand, in dem sich das Antriebsmittel befindet, eine in Breitenrichtung des Schneidwerks gemessen geringere Breite aufweist. Mit anderen Worten bewirkt die Stufe, dass die in Breitenrichtung des Schneidwerks gemessene Breite der ersten Seitenwand in ihrem unteren Wandungsbereich größer ist als in ihrem in Hochrichtung des Schneidwerks betrachtet oberhalb der Stufe befindlichen oberen Wandungsbereich. Hierdurch wird erreicht, dass die in dem unteren Wandungsbereich erforderliche, vergleichsweise große Breite der Seitenwand, die zur Aufnahme des Antriebsmittels erforderlich ist, nicht unverändert bis zur Oberseite der Seitenwand beibehalten wird, sondern mittels der mindestens einen Stufe auf ein demgegenüber geringeres Maß reduziert wird. Hierdurch ist die erste Seitenwand an ihrer Oberseite schmaler als an ihrem unteren Ende, wodurch eine unerwünschte Ablage abgeschnittener Pflanzen auf der Oberseite der ersten Seitenwand erschwert ist. Insbesondere kann die Breite der ersten Seitenwand in dem oberen Wandungsbereich kleiner sein als eine Breite des in dem unteren Wandungsbereich innerhalb der Seitenwand befindlichen Antriebsmittels.

Diese Ausgestaltung ist in Kombination mit der Ausgestaltung des Seitenwandelements der ersten Seitenwand mit mindestens zwei Stufen besonders vorteilhaft, wenn in Hochrichtung des Schneidwerks betrachtet die in dem Bereich des oberen Endes des Antriebsmittels oder oberhalb des Antriebsmittels angeordnete Stufe in Hochrichtung betrachtet oberhalb einer weiteren Stufe des Seitenwandelements ausgebildet ist. Falls das Seitenwandelement mit einer Mehrzahl von Stufen ausgebildet ist, werden diese im Sinne der vorliegenden Anmeldung ausgehend von einem unteren, dem Schneidorgan zugewandten Ende des Seitenwandelements in Hochrichtung nach oben durchgezählt. Mithin ist die am weitesten unten befindliche Stufe im Sinne der vorliegenden Anmeldung die "erste Stufe". Die nächste in Hochrichtung betrachtet oberhalb der ersten Stufe angeordnete Stufe bildet die "zweite Stufe". Gegebenenfalls weitere Stufen schließen sich in Hochrichtung mit ansteigender Nummerierung an.

Mithin ist bei dieser Ausgestaltung bevorzugt die erste Stufe des Seitenwandelements unterhalb eines Bereichs des oberen Endes des Antriebsmittels ausgebildet. Beispielsweise und vorzugsweise kann die erste Stufe gemäß vorstehender Erläuterung unmittelbar in einem unteren Ende des Seitenwandelements ausgebildet sein und dort nach Art eines Einlaufbereichs für die abgeschnittenen Pflanzen hin zu dem Boden des Schneidwerks wirken. Bevorzugt ist die in dem Bereich des oberen Endes des Antriebsmittels oder oberhalb des Antriebsmittels befindliche Stufe die zweite Stufe des Seitenwandelements. Diese bewirkt bevorzugt gemäß vorstehender Erläuterung eine Reduktion der in Breitenrichtung des Schneidwerks gemessene Breite der ersten Seitenwand auf ein Maß, dass eine gleichartig gemessene Breite des innerhalb der ersten Seitenwand angeordneten Antriebsmittels unterschreitet. Durch Wirkung der zweiten Stufe ist demzufolge die erste Seitenwand in ihrem oberen, oberhalb der zweiten Stufe angeordneten Wandungsbereich (und mithin insbesondere an ihrer Oberseite) trotz des in dem unterhalb der zweiten Stufe befindlichen unteren Wandungsbereich innerhalb der ersten Seitenwand angeordneten Antriebsmittels vergleichsweise schmal ausgeführt. Insbesondere kann die Breite der ersten Seitenwand in dem oberen Wandungsbereich geringer sein als die in Breitenrichtung des Schneidwerks gemessene Breite des Antriebsmittels.

Wie vorstehend bereits angedeutet wurde, ist eine solche Ausgestaltung des Schneidwerks besonders vorteilhaft, bei der selbiges von einem Bandschneidwerk gebildet ist. Als solches umfasst das Schneidwerk eine Mehrzahl (insbesondere zwei) von in Breitenrichtung des Schneidwerks verlaufenden Förderbändern, auf denen die mittels des Schneidorgans abgeschnittenen Pflanzen ablegbar sind. Die Förderbänder bewirken einen Transport der auf ihnen abgelegten, abgeschnittenen Pflanzen in Breitenrichtung des Schneidwerks. Hierbei sind die Förderbänder einander gegenüberliegenden Seitenabschnitten des Schneidwerks zugeordnet und bewegen sich derart, dass die abgeschnittenen Pflanzen jeweils in einen Mittelbereich des Schneidwerks gefördert werden. Der vorstehend beschriebene "Boden" des Schneidwerks ist bei dieser Ausgestaltung des Schneidwerks als Bandschneidwerk zumindest teilweise, vorzugsweise größtenteils, von den Förderbändern gebildet. Bevorzugt reichen die Förderbänder in den beiden Seitenabschnitten des Schneidwerks seitlich unmittelbar bis an die jeweiligen Seitenwände bzw. deren Seitenwandelemente heran. Auf diese Weise ist sichergestellt, dass die an den Seitenwänden herabfallenden abgeschnittenen Pflanzen von den Förderbändern erfasst und bestimmungsgemäß in Richtung des Mittelbereichs des Schneidwerks transportiert werden.

Anstelle der Ausgestaltung des Schneidwerks als Bandschneidwerk kann auch eine "klassische" Ausgestaltung des Schneidwerks vorteilhaft sein, bei der selbiges einen sich in Breitenrichtung des Schneidwerks erstreckenden Schneidtisch aufweist, an dessen vorderem Rand das Schneidorgan angeordnet ist. Der Schneidtisch ist zur Ablage der mittels des Schneidorgans abgeschnittenen Pflanzen vorgesehen und eingerichtet und bildet mithin den Boden des Schneidwerks. Bevorzugt ist ein solches Schneidwerk mit einer als drehantreibbaren Querförderschnecke ausgebildeten Querfördereinrichtung ausgestattet, die sich in Breitenrichtung des Schneidwerks erstreckt und mittels der die abgeschnittenen Pflanzen von den Seitenbereichen des Schneidwerks jeweils in Richtung des Mittelbereichs des Schneidwerks befördert werden können.

Schließlich wird die zugrunde liegende Erfindung mittels einer selbstfahrenden Erntemaschine mit den Merkmalen des Anspruchs 17 gelöst. Die Erntemaschine ist mit einem erfindungsgemäßen Schneidwerk. Das Schneidwerk kann demzufolge gemäß der vorliegenden Erfindung oder einer ihrer vorteilhaften Ausgestaltungen ausgebildet sein. Die selbstfahrende Erntemaschine ist bevorzugt ein selbstfahrender Mähdrescher.

Die Erfindung ist nachstehend anhand eines Ausführungsbeispiels, das in den Figuren dargestellt ist, näher erläutert. Es zeigt:
- Fig. 1:: Ein Querschnitt durch eine erfindungsgemäße selbstfahrende Erntemaschine,
- Fig. 2:: Eine schräge Ansicht eines erfindungsgemäßen Schneidwerks,
- Fig. 3:: Ein Detail einer ersten Seitenwand eines weiteren erfindungsgemäßen Schneidwerks,
- Fig. 4:: Ein Querschnitt durch die Seitenwand gemäß Figur 3,
- Fig. 5:: Eine Frontansicht der Seitenwand gemäß Figur 3.

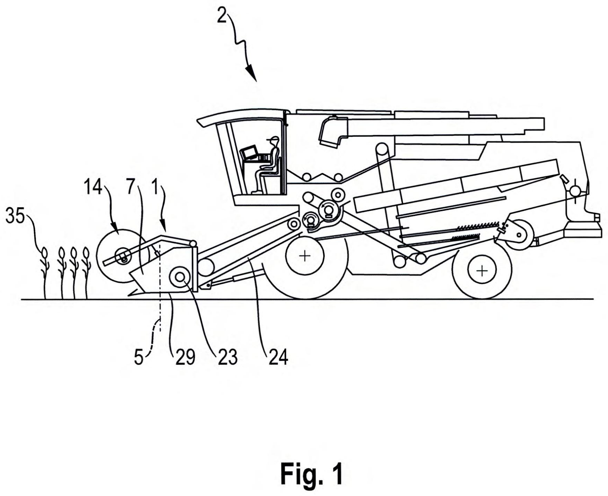

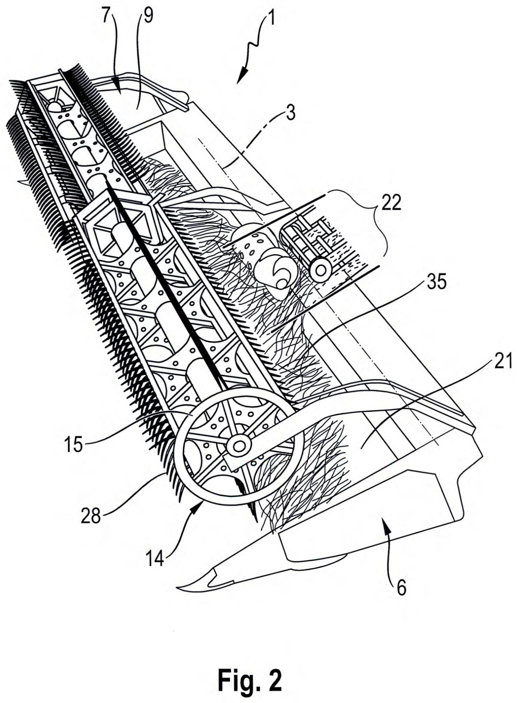

In **Figur 1** ist eine selbstfahrende Erntemaschine **2** dargestellt, die von einem selbstfahrenden Mähdrescher gebildet ist. Die Erntemaschine **2** umfasst an ihrem in Fahrtrichtung betrachtet vorderen Ende ein Schneidwerk **1,** mittels dessen auf einem Feld aufstehende Pflanzen **35** abgeschnitten werden können. Hierzu umfasst das Schneidwerk **1** an seinem vorderen Ende ein Schneidorgan **4,** das in geringem Abstand über dem Boden geführt ist und die Pflanzen **35** entsprechend knapp über dem Boden abschneiden kann. Das gezeigte Schneidwerk **1** ist gemäß einer klassischen Bauweise ausgebildet, bei der ein Boden des Schneidwerks **1** von einem Schneidtisch **29** gebildet ist. Dieser ist dazu vorgesehen, dass die mittels des Schneidorgans 4 abgeschnittenen Pflanzen **35** auf ihm abgelegt werden. Wie sich besonders gut anhand von **Figur 2** ergibt, ist es im Anschluss an dieser Ablage der abgeschnittenen Pflanzen **35** notwendig, selbige mittels einer Querfördereinrichtung in Breitenrichtung **3** des Schneidwerks **1** betrachtet in Richtung eines Mittelbereichs **22** des Schneidwerks **1** zu fördern. Die Querfördereinrichtung ist in dem in **Figur 1** gezeigten Beispiel von einer drehantreibbaren Querförderschnecke **23** gebildet, die sich in Breitenrichtung **3** des Schneidwerks **1** erstreckt. In dem Mittelbereich **22** des Schneidwerks **1** werden die abgeschnittenen Pflanzen **35** zusammengeführt und von dort von einer nicht dargestellten Fingerwalze in eine rückwärtige Richtung des Schneidwerks **1** an den nachgeschalteten Schrägförderer **24** der Erntemaschine **2** übergeben.

Zur Sicherstellung eines sauberen Abschnitts der Pflanzen **35** von dem Feld sowie einer geordneten Ablage der abgeschnittenen Pflanzen **35** auf dem Schneidtisch **29** verfügt das gezeigte Schneidwerk **1** ferner über eine Haspel **14,** die in Hochrichtung **5** des Schneidwerks **1** betrachtet oberhalb des Schneidorgans **4** angeordnet ist. Die Haspel **14** wird bezogen auf die Darstellung gemäß **Figur 1** entgegen dem Uhrzeigersinn um ihre Mittelachse drehangetrieben, wobei sich die Mittelachse der Haspel **14** parallel zu der Breitenrichtung **3** des Schneidwerks **1** erstreckt. Die Haspel **14** erstreckt sich zwischen endseitigen Seitenwänden **6, 7** des Schneidwerks **1.** Bei bestimmungsgemäßem Betrieb der Erntemaschine **2** erfasst die drehangetriebene Haspel **14** mit ihren Haspelfingern **28** die Pflanzen **35** und bewirkt dadurch die geordnete Ablage auf dem Schneidtisch **29** bzw. dem Förderband **21** (je nach Ausgestaltung des Schneidwerks **1).**

In dem in **Figur 1** dargestellten Querschnitt ist der Blick auf die in Fahrtrichtung der Erntemaschine **2** betrachtet rechte, zweite Seitenwand **7** des Schneidwerks 1 frei, die ein rechtes Ende des Schneidwerks 1 bildet. Der Aufbau des Schneidwerks **1** ergibt sich im weiteren Detail anhand von **Figur** 2. Das dortige Schneidwerk **1** ist als Bandschneidwerk ausgebildet. Das bedeutet, dass die Querfördereinrichtung, der es zur Zusammenführung der abgeschnittenen Pflanzen **35** in dem Mittelbereich **22** des Schneidwerks **1** bedarf, zwei Förderbänder **21** umfasst, von denen jeweils eines einem Seitenbereichen des Schneidwerks **1** zugeordnet ist. Die Seitenbereiche des Schneidwerks 1 erstrecken sich beidseits des Mittelbereichs **22** bis hin zu den Seitenwänden **6, 7** des Schneidwerks **1.** Die Förderbänder **21** sind derart antreibbar, dass die abgeschnittenen Pflanzen **35** in Richtung parallel zur Breitenrichtung **3** des Schneidwerks **1** zu dem Mittelbereich **22** des Schneidwerks 1 gefördert werden.

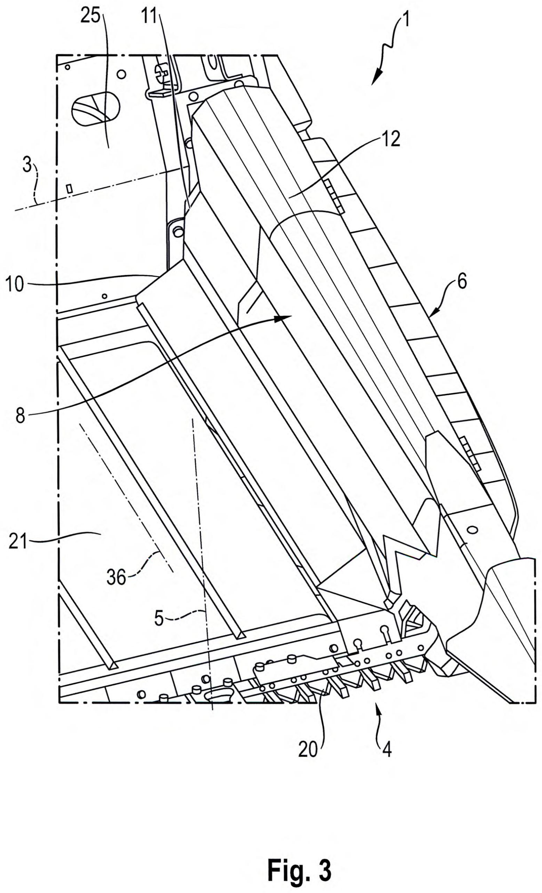

Aus den weiteren **Figuren 3 bis 5** ergibt sich eine beispielhafte Ausgestaltung der ersten Seitenwand **6** eine Schneidwerks **1,** die gemäß einer bevorzugten Ausgestaltung der vorliegenden Erfindung ausgebildet ist. Die erste Seitenwand **6** bildet ebenso wie die gegenüberliegende, zweite Seitenwand **7** des Schneidwerks **1** ein seitliches Ende des Schneidwerks **1.** Zwischen den beiden Seitenwänden **6, 7** erstreckt sich das Schneidorgan **4,** das hier von einem an sich bekannten Mähmesser **20** gebildet ist. Das Schneidorgan **4** ist in senkrecht zu der Breitenrichtung **3** orientierten Längsrichtung **36** betrachtet an einem vorderen Ende des Schneidwerks **1** angeordnet. Die in Breitenrichtung **3** des Schneidwerks **1** gemessene Länge des Schneidorgans **4** entspricht im Wesentlichen der gleichartig gemessenen Breite des Schneidwerks **1** insgesamt. Unmittelbar hinter dem Schneidorgan **4** befinden sich die Förderbänder **21,** die den Boden des Schneidwerks **1** bilden. An einem hinteren Ende ist das Schneidwerk **1** von einer Rückwand **25** begrenzt.

Die nachfolgenden Erläuterungen bezüglich der Ausgestaltung der ersten Seitenwand **6** des Schneidwerks **1** sind analog auch auf die zweite Seitenwand **7** übertragbar. Nachfolgende Erläuterungen zu speziellen Ausgestaltungen und dadurch erwirkte Vorteile können demzufolge analog auf die zweite Seitenwand 7 übertragen werden.

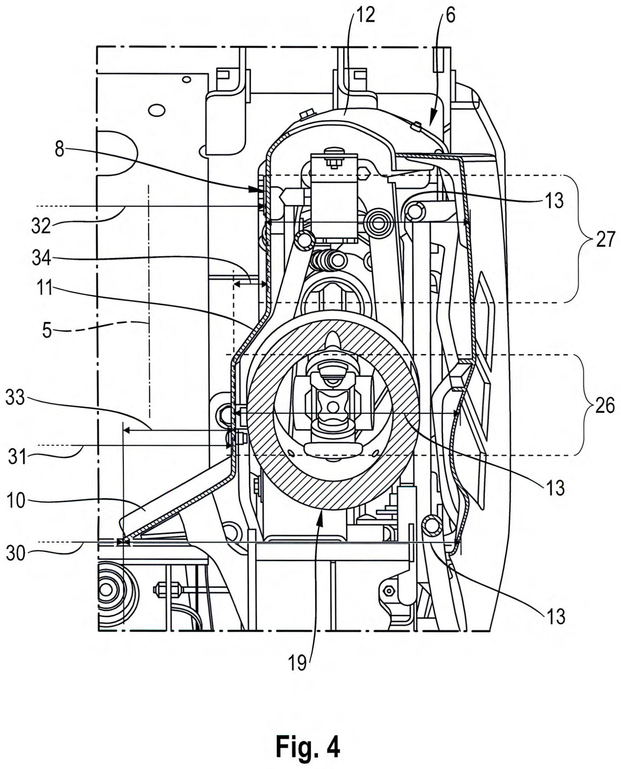

Die erste Seitenwand 6 weist eine gekrümmte Oberseite **12** auf. Dies ergibt sich besonders gut anhand von **Figur 4****.** In dem gezeigten Beispiel ist die Krümmung konvex ausgeformt. Die Krümmung der Oberseite **12** erstreckt sich nahezu über eine gesamte Breite **13** der ersten Seitenwand **6,** die die erste Seitenwand **6** in ihrem oberen, sich an die Oberseite **12** nach unten anschließenden, oberen Wandungsbereich **27** aufweist. Ferner ist die Oberseite **12** der ersten Seitenwand **6** derart ausgebildet, dass die gekrümmte Ausgestaltung sich über die gesamte in Längsrichtung **36** des Schneidwerks **1** betrachtete Länge der ersten Seitenwand **6** erstreckt. Dies ist besonders gut anhand von **Figur 3** erkennbar. Die gekrümmte Ausführung der Oberseite **12** hat den Effekt, dass sich auf der Oberseite **12** abgeschnittene Pflanzen **35** nicht ohne weiteres ablagern und ansammeln können. Stattdessen wird durch die Krümmung bewirkt, dass die Pflanzen **35** entweder "nach links" oder "nach rechts" von der Seitenwand **6** herabfallen.

Damit es bei einem Herabfallen der Pflanzen **35** auf das an die Seitenwand **6** angrenzende Förderband **21** nicht dazu kommt, dass Halme der Pflanzen **35** in ungewünschter Weise berechnen oder knicken, ist ein Seitenwandelement **8** der ersten Seitenwand unter Ausbildung von insgesamt zwei Stufen **10, 11** gestuft ausgebildet. Das Seitenwandelement **8** der ersten Seitenwand **6** ist dem Schneidorgan **4** zugewandt bildet hierdurch einen seitlichen Abschluss der Seitenwand **6** hin zu dem Schneidorgan **4.** Die in den **Figuren 3 bis 5** nicht dargestellte zweite Seitenwand **7** weist ihrerseits ebenfalls ein Seitenwandelement **9** auf. Die Seitenwandelemente **8, 9** sind in dem gezeigten Beispiel von Blechteilen gebildet die einen Innenraum der jeweiligen Seitenwand **6, 7** räumlich in Richtung des Mittelbereichs **22** des Schneidwerks **1** begrenzen.

Die beiden Stufen **10, 11** des Seitenwandelements **8** der ersten Seitenwand **6** ergeben sich besonders gut anhand von **Figur 4****.** Die erste Stufe **10** ist unmittelbar an einem dem Boden des Schneidwerks **1** zugewandten Ende der Seitenwand **6** ausgebildet und ist in dem gezeigten Beispiel bezogen auf die Breitenrichtung **3** des Schneidwerks **1** schräg orientiert. Auf diese Weise bildet die erste Stufe **10** gewissermaßen einen Einlaufbereich an dem Übergang von der Seitenwand **6** zu dem Boden des Schneidwerks **1,** der gemäß vorstehender Beschreibung hier von einem Förderband **21** gebildet. Auf diese Weise werden abgeschnittene Pflanzen **35,** die in Hochrichtung **5** des Schneidwerks **1** von der Seitenwand 6 herabfallen, durch die erste Stufe **10** in ihrer Umlenkung hin zu dem Boden des Schneidwerks **1** "sanfter" abgefangen als dies ohne die erste Stufe **10** der Fall wäre. Hierdurch wird das Brechen bzw. Knicken der Halme der Pflanzen **35** zumindest weitestgehend vermieden.

Beide Stufen **10, 11** des Seitenwandelements **8** bewirken einen Versatz einer Oberfläche des Seitenwandelements **8** in Breitenrichtung **3** des Schneidwerks **1** "nach außen". Dies ist in **Figur 4** besonders gut anhand der dort eingezeichneten Stufenmaße **33, 34** der beiden Stufen **10, 11** erkennbar. Somit ist die Breite 13 der ersten Seitenwand **6** hier und vorzugsweise an ihrem unteren Ende maximal. Dies ist in **Figur 4** durch einen ersten Abstand **30** veranschaulicht, der eine parallel zu der Breitenrichtung **3** des Schneidwerks **1** gemessenen Abstand der Oberfläche des Seitenwandelements **8** von einer in den Figuren nicht dargestellten Mittelebene beschreibt, die senkrecht zu der Breitenrichtung **3** orientiert ist und das Schneidwerk **1** mittig in zwei gleiche Hälften teilt. Bedingt durch die erste Stufe **10** verspringt das Seitenwandelement **8** in Richtung nach außen, sodass der zweite Abstand **31** der Oberfläche des Seitenwandelements **8,** den das Seitenwandelement **8** oberhalb der ersten Stufe **10** von der Mittelebene des Schneidwerks **1** aufweist, größer ist als der erste Abstand **30.** Die Differenz zwischen dem zweiten Abstand **31** und dem ersten Abstand **30** beschreibt das Stufenmaß **33** der ersten Stufe **10.** In Hochrichtung **5** des Schneidwerks **1** betrachtet oberhalb der ersten Stufe **10** ist die zweite Stufe **11** ausgebildet. Diese ist ebenfalls in sich eben und erstreckt sich bezogen auf die Breitenrichtung **3** des Schneidwerks **1** schräg. Zwischen der ersten Stufe **10** und der zweiten Stufe **11** erstreckt sich das Seitenwandelement **8** zumindest im Wesentlichen parallel zu der Hochrichtung **5** des Schneidwerks **1.** In diesem "konstanten" Bereich der Seitenwand **6** ist die Breite **13** der Seitenwand **6** gegenüber der Breite **13** an ihrem unteren Ende deutlich reduziert. Dieser Abschnitt der Seitenwand **6** zwischen den beiden Stufen **10, 11** wird im Weiteren als "unterer Wandungsbereich **26"** bezeichnet. Die zweite Stufe **11** definiert einen Übergang des unteren Wandungsbereichs **26** hin zu dem "oberen Wandungsbereich **27"** der Seitenwand **6.**

Die zweite Stufe 11 ist hier und vorzugsweise in ihrer Position relativ zu einem Antriebsmittel **19** festgelegt, das sich innerhalb der ersten Seitenwand **6** (hier und vorzugsweise: in dem unteren Wandungsbereich **26** der ersten Seitenwand **6)** befindet. Die zweite Stufe **11** ist einem Hochrichtung **5** betrachtet oberen Ende des Antriebsmittels **19** zugeordnet, sodass die Breite **13** der Seitenwand **6** durch die zweite Stufe **11** oberhalb des Antriebsmittels **19,** nämlich in dem oberen Wandungsbereich **27,** weiter reduziert wird. Insbesondere ist hier und vorzugsweise die Breite **13** der Seitenwand **6** in dem oberen Wandungsbereich **27** auf ein Maß reduziert, das in dem unteren Wandungsbereich **26** aufgrund des Vorhandenseins des Antriebsmittels **19** nicht realisierbar ist. Dies ist durch die Abmessungen des Antriebsmittels **19** bedingt, das einen gewissen Bauraum innerhalb der ersten Seitenwand **6** beansprucht. Die zweite Stufe **11** erlaubt es mithin, die vergleichsweise große Breite **13** der ersten Seitenwand **6** in dem unteren Wandungsbereich **26** in Richtung der Oberseite **12** der Seitenwand **6** in dem oberen Wandungsbereich **27** auf ein demgegenüber geringeres Maß zu reduzieren. Mithin ist ein parallel zur Breitenrichtung **3** des Schneidwerks **1** gemessener dritter Abstand **32** der Oberfläche des Seitenwandelements **8** von der Mittelebene des Schneidwerks **1** größer als der zuvor beschriebene zweite Abstand **31.** Die Differenz zwischen dem zweiten Abstand **31** und dem dritten Abstand **32** bildet das Stufenmaß **34** der zweiten Stufe **11.**

Im Ergebnis ist die erste Seitenwand **6** mit ihrem Seitenwandelement **8** derart ausgebildet, dass beide Stufen **10, 11** jeweils eine Reduktion der in Breitenrichtung **3** des Schneidwerks **1** gemessenen Breite der ersten Seitenwand **6** bewirken. Hierbei ist die Breite **13** der ersten Seitenwand **6** in ihrem unteren Ende maximal und an ihrem oberen Ende bzw. ihrer Oberseite **12** minimal. Die Breite **13** der ersten Seitenwand **6** wird durch beide Stufen **10, 11** jeweils reduziert.

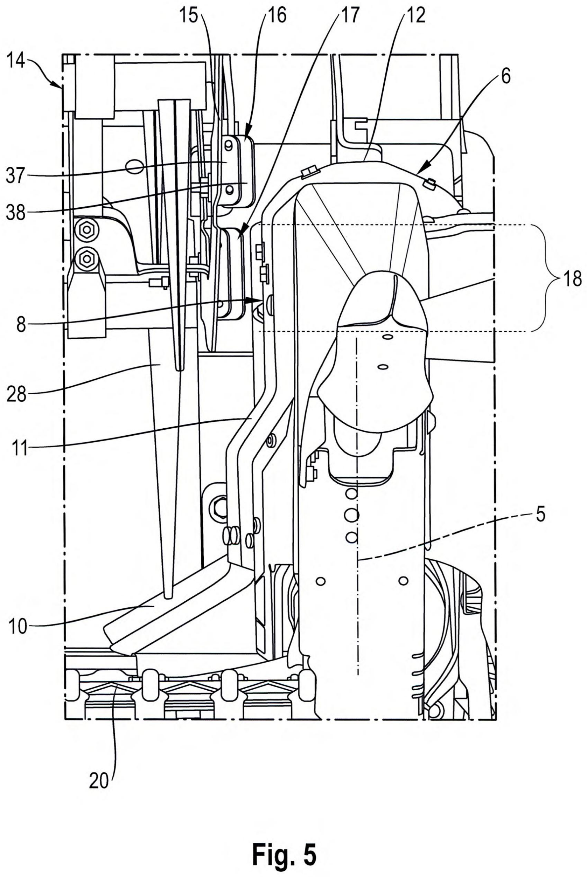

In besonders bevorzugter Ausgestaltung ist in dem gezeigten Beispiel die Haspel **14** mit einer Mehrzahl von Paddeln **16, 17** ausgestattet. Dies ist besonders gut anhand von **Figur 5** erkennbar. Die Haspel **14** weist an ihren beiden gegenüberliegenden Enden jeweils einen Haspelteller **15** auf. In **Figur 5** ist der Haspelteller **15** erkennbar, der sich an dem in Fahrtrichtung der Erntemaschine **2** linken Ende der Haspel **14** befindet und mithin in der Nähe zu der ersten Seitenwand **6** angeordnet ist. Die beiden Paddel **16, 17** sind an den Haspelteller **15** angeschlossen und erstrecken sich ausgehend von letzterem in Breitenrichtung **3** des Schneidwerks **1** von dem Haspelteller **15** weg. Mit anderen Worten erstrecken sich die beiden Paddel **16, 17** ausgehend von dem Haspelteller **15** auf die erste Seitenwand **6** zu. Hierbei sind die beiden Paddel **16, 17** bezogen auf eine in den Figuren nicht dargestellte Mittelachse der Haspel **14,** um die die Haspel **14** drehantreibbar ist, in unterschiedlichen radialen Abständen von der Mittelachse angeordnet.

Die beiden Paddel 16, 17 umfassen jeweils eine Basis **37** und eine von Gummi gebildete Lippe **38.** Die Basis **37** ist fest mit dem Haspelteller **15** verbunden, wobei diese Verbindung hier und vorzugsweise als Verschraubung ausgebildet ist. Die Lippe **38** ist wiederrum mit der Basis **37** verbunden, hier und vorzugsweise ebenfalls in Form einer als Verschraubung ausgebildeten Verbindung. Die Lippe **38** erstreckt sich von der Basis in Richtung auf das Seitenwandelement **8** der ersten Seitenwand **6** zu. Die Lippe **38** bildet eines freies Ende des jeweiligen Paddels **16, 17,** das von dem Haspelteller **15** abgewandt ist.

Die beiden Paddel **16, 17** wirken in einem Wirkungsbereich, der einem Wandungsabschnitt **18** des Seitenwandelements **8** der ersten Seitenwand **6** zugeordnet ist. Die Paddel **16, 17** sind dazu geeignet, sich bei bestimmungsgemäßem Betrieb des Schneidwerks **1,** in dessen Zuge die Haspel **14** drehangetrieben wird, in dem Wandungsabschnitt **18** an der Seitenwandelement **8** entlang zu bewegen, und zwar in unmittelbarer Nähe zu dem Seitenwandelement **8.** Dies erfolgt hier und vorzugsweise kontaktfrei, das heißt ohne unmittelbar schleifenden Kontakt der Paddel **16, 17** an der Oberfläche des Seitenwandelements **8.**

Hier und vorzugsweise ist der Wandungsabschnitt **18** des Seitenwandelements **8** in dem oberen Wandungsbereich **27** der Seitenwand **6** angeordnet. Dort ist der Aufenthalt von abgeschnittenen Pflanzen **35** während eines Betriebs der Erntemaschine **2** verstärkt zu erwarten, sodass die abstreifende Wirkung der Paddel **16, 17** dazu beitragen kann, Pflanzen **35** von der Seitenwand **6** abzustreifen und hierdurch zu mobilisieren. In der Folge können die Pflanzen **35** durch Wirkung der Paddel **16, 17** erfasst und hierdurch in Richtung des Bodens des Schneidwerks **1** abgeführt werden. In dem gezeigten Beispiel befindet sich der Wandungsabschnitt **18** des Seitenwandelements **8,** dem der Wirkungsbereich der Paddel **16, 17** zugeordnet ist, oberhalb der zweiten Stufe **11** des Seitenwandelements **8.**

In der gezeigten Ausgestaltung ist die Haspel **14** ferner derart auf das Seitenwandelement **8** abgestimmt, dass die Haspelfinger **28,** die in Richtung der Mittelachse der Haspel **14** betrachtet unmittelbar neben dem Haspelteller **15** angeordnet sind (siehe **Figur 5****),** ihren jeweiligen Wirkungsbereich oberhalb der ersten (und somit untersten) Stufe **10** des Seitenwandelements 8 der ersten Seitenwand **6** aufweisen. Mit anderen Worten wirken diese Haspelfinger **28** direkt neben der Seitenwand **6** und sorgen ergänzend dafür, dass sich direkt an der Seitenwand **6** keine abgeschnittenen Pflanzen **35** ansammeln können. Hierdurch wird der Gutfluss positiv beeinflusst.

### Bezugszeichenliste

- 1: Schneidwerk
- 2: Erntemaschine
- 3: Breitenrichtung
- 4: Schneidorgan
- 5: Hochrichtung
- 6: Erste Seitenwand
- 7: Zweite Seitenwand
- 8: Seitenwandelement der ersten Seitenwand
- 9: Seitenwandelement der zweiten Seitenwand
- 10: Erste Stufe
- 11: Zweite Stufe
- 12: Oberseite
- 13: Breite der ersten Seitenwand
- 14: Haspel
- 15: Haspelteller
- 16: Erstes Paddel
- 17: Zweites Paddel
- 18: Wandungsabschnitt
- 19: Antriebsmittel
- 20: Mähmesser
- 21: Förderband
- 22: Mittelbereich
- 23: Querförderschnecke
- 24: Schrägförderer
- 25: Rückwand
- 26: Unterer Wandungsbereich
- 27: Oberer Wandungsbereich
- 28: Haspelfinger
- 29: Schneidtisch
- 30: erster Abstand
- 31: zweiter Abstand
- 32: dritter Abstand
- 33: Stufenmaß erste Stufe
- 34: Stufenmaß zweite Stufe
- 35: Pflanzen
- 36: Längsrichtung
- 37: Basis
- 38: Lippe

## Patentansprüche

1. Schneidwerk (1) für eine selbstfahrende Erntemaschine (2), insbesondere für einen selbstfahrenden Mähdrescher, umfassend
- ein antreibbares, sich in Breitenrichtung (3) des Schneidwerks (1) erstreckendes Schneidorgan (4),
- zwei Seitenwände (6, 7), die einander gegenüberliegenden Enden des Schneidwerks (1) bilden,
wobei das Schneidorgan (4) dazu vorgesehen und eingerichtet ist, auf einem Feld aufstehende Pflanzen abzuschneiden,
wobei eine in Breitenrichtung (3) des Schneidwerks (1) gemessene Länge des Schneidorgans (4) im Wesentlichen einer gleichartig gemessenen Breite des Schneidwerks (1) entspricht,
wobei die Seitenwände (6, 7) jeweils ein dem Schneidorgan (4) zugewandtes Seitenwandelement (8, 9) umfassen, das einen seitlichen Abschluss der jeweiligen Seitenwand (6, 7) hin zu dem Schneidorgan (4) bildet,
**dadurch gekennzeichnet, dass**
das Seitenwandelement (8) einer ersten der beiden Seitenwände (6) unter Ausbildung mindestens einer Stufe (10, 11) gestuft ausgebildet ist,
wobei mindestens eine der Seitenwände (6, 7) eine gekrümmte Oberseite (12) aufweist.

2. Schneidwerk (1) nach Anspruch 1, **dadurch gekennzeichnet, dass** die Seitenwand (6, 7), die die gekrümmte Oberseite (12) aufweist, die erste Seitenwand (6) ist.

3. Schneidwerk (1) nach Anspruch 1, **dadurch gekennzeichnet, dass** die Oberseiten (12) beider Seitenwände (6, 7) gekrümmt ausgebildet sind.

4. Schneidwerk (1) nach einem der vorhergehenden Ansprüche, **dadurch gekennzeichnet, dass** die Krümmung der Oberseite (12) konvex ist.

5. Schneidwerk (1) nach einem der vorhergehenden Ansprüche, **dadurch gekennzeichnet, dass** das gestufte Seitenwandelement (8) der ersten Seitenwand (6) mindestens zwei Stufen (10, 11), vorzugsweise genau zwei Stufen (10, 11), aufweist.

6. Schneidwerk (1) nach einem der vorhergehenden Ansprüche, **dadurch gekennzeichnet, dass** die mindestens eine Stufe (10, 11) des Seitenwandelements (8) der ersten Seitenwand (6), vorzugsweise sämtliche Stufen (10, 11), eine Reduktion einer in Breitenrichtung (3) des Schneidwerks (1) gemessenen Breite (13) der ersten Seitenwand (6) bewirkt bzw. bewirken, wobei die Breite (13) der ersten Seitenwand (6) an ihrem unteren, in Hochrichtung (5) von dem Schneidorgan (4) zugewandten Ende maximal ist.

7. Schneidwerk (1) nach Anspruch 6, **dadurch gekennzeichnet, dass** die Breite (13) der ersten Seitenwand (6) an ihrem oberen, in Hochrichtung (5) von dem Schneidorgan (4) abgewandten Ende minimal ist, wobei vorzugsweise die Breite (13) der ersten Seitenwand (6) durch jede Stufe (10, 11) reduziert wird.

8. Schneidwerk (1) nach einem der vorhergehenden Ansprüche, **gekennzeichnet durch** eine sich parallel zu dem Schneidorgan (4) erstreckende, zumindest im Wesentlichen oberhalb des Schneidorgans (4) angeordnete, drehantreibbare Haspel (14), die eine Vielzahl von Haspelfingern (28) umfasst und dazu vorgesehen und eingerichtet ist, beim bestimmungsgemäßen Betrieb des Schneidwerks (1) im Zuge des Abschneidens der Pflanzen mittels des Schneidorgans (4) mit den Pflanzen einzugreifen und dadurch einen sauberen Abschnitt der Pflanzen sowie im Anschluss an den Abschnitt eine geordnete Ablage der abgeschnittenen Pflanzen zu bewirken.

9. Schneidwerk (1) nach Anspruch 8, **dadurch gekennzeichnet, dass** die Haspel (14) an ihrem der ersten Seitenwand (6) zugewandten Ende einen Haspelteller (15) aufweist, an dem mindestens ein Paddel (16, 17) gelagert ist, das sich ausgehend von dem Haspelteller (15) in Breitenrichtung (3) des Schneidwerks (1) von dem Haspelteller (15) weg erstreckt.

10. Schneidwerk (1) nach Anspruch 9, **dadurch gekennzeichnet, dass** ein Wirkungsbereich des mindestens einen Paddels (16, 17) einem Wandungsabschnitt (18) des Seitenwandelements (8) der ersten Seitenwand (6) zugeordnet ist, wobei das mindestens eine Paddel (16, 17) dazu geeignet ist, sich bei bestimmungsgemäßem Betrieb des Schneidwerks (1) in dem Wandungsabschnitt (18), vorzugsweise kontaktfrei, an dem Seitenwandelement (8) entlang zu bewegen.

11. Schneidwerk (1) nach Anspruch 10, **dadurch gekennzeichnet, dass** sich der Wandungsabschnitt (18) des Seitenwandelements (8), dem der Wirkungsbereich des mindestens einen Paddels (16, 17) zugeordnet ist, oberhalb der mindestens einen Stufe (11) befindet.

12. Schneidwerk (1) nach einem der Ansprüche 8 bis 11, **dadurch gekennzeichnet, dass** oberhalb der mindestens einen Stufe (10, 11) des Seitenwandelements (8) der ersten Seitenwand (6) mindestens ein Haspelfinger (28) der Haspel (14) einen Wirkungsbereich aufweist.

13. Schneidwerk (1) nach Anspruch 12, sofern Anspruch 8 auf Anspruch 5 rückbezogen ist, **dadurch gekennzeichnet, dass** sich der Wirkungsbereich des mindestens einen Haspelfingers (28) oberhalb der in Hochrichtung (5) des Schneidwerks (1) betrachtet untersten Stufe (10) befindet.

14. Schneidwerk (1) nach einem der vorhergehenden Ansprüche, **dadurch gekennzeichnet, dass** in der ersten Seitenwand (6) ein Antriebsmittel (19) zum Antreiben des Schneidorgans (4) angeordnet ist, wobei die mindestens eine Stufe (11) des Seitenwandelements (8) der ersten Seitenwand (6) in Hochrichtung (5) betrachtet derart im Bereich eines oberen Endes des Antriebsmittels (19) oder oberhalb des Antriebsmittels (19) angeordnet ist, dass die erste Seitenwand (6) in einem oberhalb des Antriebsmittels (19) befindlichen oberen Wandungsbereich (27) gegenüber einem unteren Wandungsbereich (26), in dem sich das Antriebsmittel (19) befindet, eine in Breitenrichtung (3) des Schneidwerks (1) geringere Breite (13) aufweist.

15. Schneidwerk (1) nach Anspruch 14, soweit dieser auf Anspruch 5 rückbezogen ist, **dadurch gekennzeichnet, dass** die in Hochrichtung (5) betrachtet in dem Bereich des oberen Endes des Antriebsmittels (19) oder oberhalb des Antriebsmittels (19) angeordnete Stufe (11) in Hochrichtung (5) betrachtet oberhalb einer weiteren Stufe (10) des Seitenwandelements (8) ausgebildet ist.

16. Schneidwerk (1) nach einem der vorhergehenden Ansprüche, **dadurch gekennzeichnet, dass** das Schneidwerk (1) von einem Bandschneidwerk gebildet ist, wobei das Schneidwerk (1) in Breitenrichtung (3) des Schneidwerks (1) verlaufende Förderbänder (21) aufweist, auf denen die mittels des Schneidorgans (4) abgeschnittenen Pflanzen ablegbar sind, wobei die Förderbänder (21) dazu vorgesehen und eingerichtet sind, die abgeschnittenen Pflanzen in einen Mittelbereich (22) des Schneidwerks (1) zu befördern.

17. Selbstfahrende Erntemaschine (2), insbesondere ein selbstfahrender Mähdrescher, umfassend ein Schneidwerk (1),
**dadurch gekennzeichnet, dass**
das Schneidwerk (1) gemäß einem der vorhergehenden Ansprüche ausgebildet ist.
